# EUROPEAN PATENT APPLICATION

(11) **EP 2 381 089 A1**
(43) Date of publication of application: **26.10.2011**
(21) Application number: 10075171.8
(22) Date of filing: 26.04.2010
(51) Int. Cl.: F03B 13/26, F03B 17/02

(54) **Hydroelectric-power central equipped with automatic elevatory station**

(71) Applicant: Pereira Roque, Francisco Fernandes, Loures, 2660-209 (PT)
(72) Inventor: Pereira Roque, Francisco Fernandes, Loures, 2660-209 (PT)
(74) Representative: Vieira Barreto, Paulo

(57) **Abstract**

The automatic elevator station, is a system that consists of returning the barrage, more than 70% of the water, after this having done to turn the turbines. So that the system functions the floating platforms must have the same capacity that a boat has, to remain themselves to float, with more than 100 tons of load. The automatic elevatory station, is constituted by: a pair of twin canal locks, but will be necessary the same constructs more canal locks in level. In each canal lock (1) it goes up and it goes down a floating platform (2), that it makes to go up and to go down the enormous pistons of the bombs (4). The water pressured for the pistons, leaves the bombs (5) for a behavior, through an exit valve (6). When the canal lock starts to unload, the floating platform starts to go down, pulling the enormous pistons for low, making the aspiration of the water (7), and recommencing a new cycle. Due to enormous force that the floating platforms have underneath for top, (when they are to go up in the respective canal locks), and also which had ace great dimensions of the piston bombs, a set of two or more automatic elevatory stations, can return more 70%de the water to the barrage.

## Description

In the set of the energies you renewed, the hydraulically energy is one of most important. The objective of this study, is to develop a theory, according to which, the barrage can come to produce the double of the electric Dade that produces currently. This system consists of delaying the esvaziamento of the barrages during the spring and the summer, through a system of return of waters, installing one or more automatic elevator stations. Being thus, we will be able to keep the barrages with a level the top of the average, or close to the maximum capacity, during almost every month it year. I mention to only ace barrages of Portugal and other countries of the south of the Europe, where the barrages have a sufficiently low level in August and September, which had to the hot and dry Mediterranean climate to be during the summer and the autumn.

The actuaries barrages and the new barrages, can come to be equipped with one or more automatic elevator stations. Being thus, these will be able to return to 50% 90% of the water the barrage after having moving the turbines. The automatic elevator station is contiguity for: two twin canal locks and respective floating platforms, two sets of piston bombs. The pistons of these bombs, must have between 1 and 3 diameter m. Each bomb has a valve of water entrance and another one of exit. Had ace dimensions of the bombs and load capacity of the floating platforms, the barrage, a great water percentage can be returned.

--This invention has as starting point, the following comment; for example: a ship of merchandises, carries a load from 100 tons. If this ship come of the sea, to enter in a great river, and when arriving at a hydroelectric-power central office, to enter in a canal lock to go up until the o level of the barrage, this wants to say that the water that enters in the canal lock, goes to raise 100 tons, more the weight of the ship. If to ignore the weight of the ship, we can say that the system produces at least 100.000 kg of hydraulically force. This enormous hydraulically force that actual of low for top, can be transformed into electric Dade!

When we observe the sea, we verify that: for greater that is the ship, (10 tons or 300,000 tons), whenever the tide goes down and goes up, the ship is obliged to go down and to go up with it. If a canal lock will have dimension and enough depth, for a great or average platform to float, from this point the canal lock functions as the tides, and enactment has the same force underneath for top. When to obtain for the platform to float, the canal lock must be reduced the minimum dimension. Therefore it is logical that: how much bigger it will be the canal lock, more time delays to full; but this also depends on the moor or minor volume of water that leaves the turbines.

If to round off the functioning of the canal of Panama, verify that the enormous canal locks constructed there, make to go up until 6m of height, ships with sets of ten or hundreds of tons of load, ------ of the Atlantic Ocean, for the Pacific Ocean. In contrary direction, same or the other canal locks, they make to go down until 6m, other great ships,----of the Pacific Ocean for the Atlantic Ocean. Therefore, in a hydroelectric-power central office, two twin canal locks, or more pairs of canal locks will have been constructed, to make to go up small, average or great floating platforms, with load capacity for 10, 50, or 100 tons. If these floating platforms underneath to pressure some bombs of piston for top, the mechanical energy. The piston bombs, come back to transform the energy mechanics into hydraulically energy, but with great pressure. This water pressured for the bombs, goes up through the behaviors until the o level of the barrage. The floating platforms, go up and go down inside of the respective canal locks. Each pair of twin canal locks functions in set and opposing directions: while a floating platform goes down. The automatic elevator station, uses only the water that passed in the turbines and will be constructed downstream of the barrage, in one of the edges of the river, while in the other edge if it finds the unloaded of full. Water leaves turbines, and goes for species of dam, that all occupies all the width of the river and the 200 length of 100 or m, since the exit of the water of the turbines, until the entrance of the water that contains, does not have to exceed 1m of height not to harm the functioning of the turbines. The water is unloaded in the canal locks of automatic and discontinuous form. The canal locks must have enough depth, for the floating platforms are always to float, exactly when they meet in p.m.i. Thus, we have the certainty that the floating platform soon starts to go up, when the water enters in the canal lock. The floating platforms, do not have lateral oscillations, because they meet ace walls of the canal lock, through the plastic wheels with massive tire. Each one of these wheels can be pressured by a helical spring, but at this moment it is calculated that the connecting rods of the wheels must be fixed, regulating the squeeze against the walls of the canal lock, through a thread. They must be placed at least 4 wheels in each lateral face of the floating platform: two about 1m of inferior corners and two about 1m the superior corners.

### Previous Technique

In the current state of the technique, the return of waters ace barrages, is made with electric bombs, that consume electric energy proceeding from the Aeolian parks, or of the thermoelectric central offices the coal, or other power plants.

### DESCRIPTION OF THE FIGURES

- Fig.1 represents two twin canal locks, in functioning, showing a canal lock of the almost full left side, whose floating platform is almost to arrive at p.m. superior. Of the right side, it meets another almost empty canal lock, finishing to unload the water for the river, whose floating platform is almost to arrive at p.m. inferior.
- fig. 2 represent the canal lock of the left side, to unload the water for the river, being been to be almost empty, while the canal lock of the right side of finds almost full.
- fig. 3 represent a floating platform, with the connecting rods of the supported bombs of piston in the respective supports. The arrows indicate the exit of the water of the bombs, pressured for the pistons, because the canal lock is to full, making to go up the floating platform.

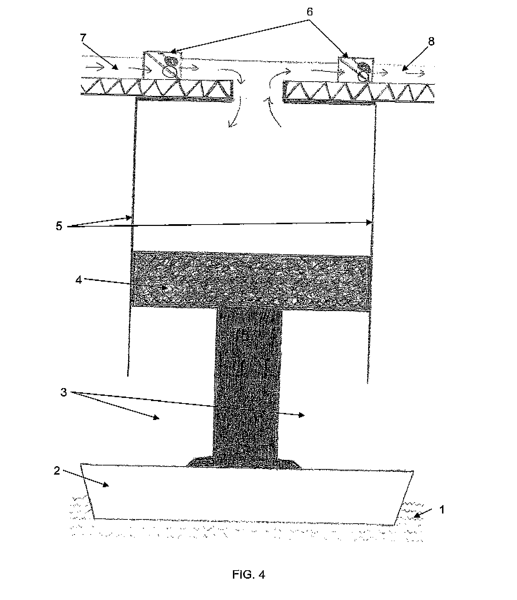

- fig. 4 show the details of the one of the bombs, showing mainly valve of entrance and the valve of water exit.

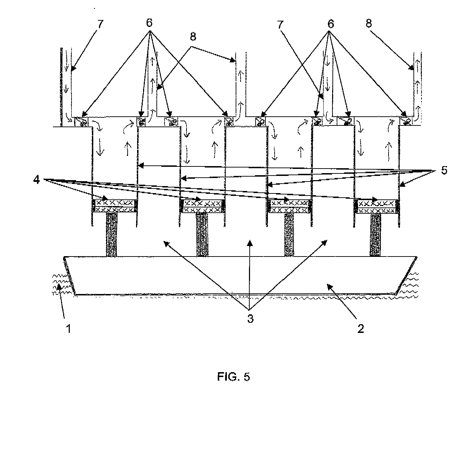

- fig. 5 represent a floating platform, that puts into motion 4 bombs, showing the valves and respective behaviors of entrance and water exit.
- fig. 6 represent a mobile tank that in this figure substituidas the piston bombs. The mobile tank is supported in an elevator of crossed bars, that the floating platform makes to go up and to go down.
- Project A/B represents the localization and installation of a set of automatic elevatory stations, that can downstream be constructed of the barrage, to a 300 distance saw 200 or m.

### DESCRIPTION OF THE PREFERRED CONCRETION

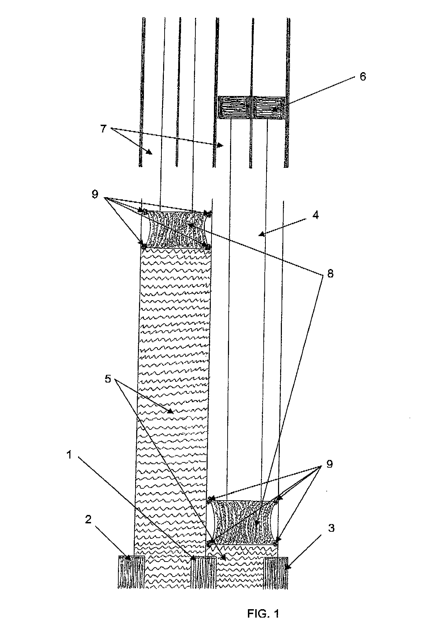

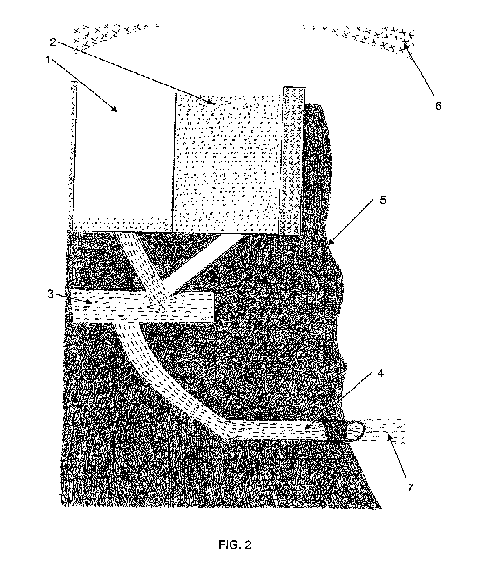

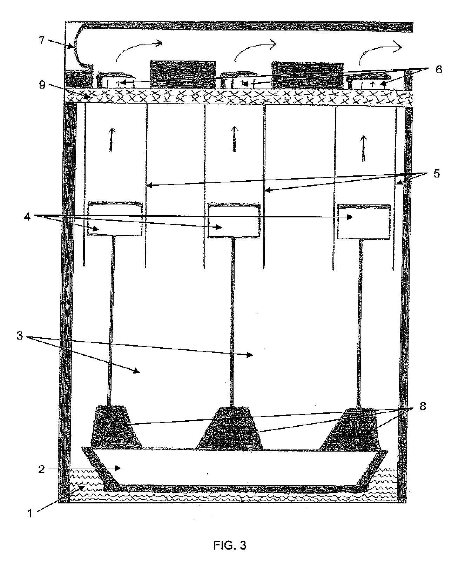

Starting to describe the details of this invention, and making reference ace figures, the automatic elevator station is constituted by a set of agencies represented in the said figures, mounted as seguidamente it describes:
The automatic elevator station, is constituted by two equal canal locks and respective floating platforms (fig.1) e (fig.2), a set of bombs of piston in each floating platform (fig.3), behaviors that lead the water until the o level of barrage 8, an iron structure where the bombs of 9 piston are suspended... etc. The pistons of bombs 4, must have three segments. These make little pressure type-spring, against the walls of cylinder 5, as segment is that it makes the lubrication. The segments inferior and superior, must be moved away one from the other more than 40cm, so that the pistons slide of steady form, and if they keep balanced, during the ascent and the descending.

Each groove has two springs of segment, with the extremities placed in opposing sides, so that a spring closes the extremity of the other, thus forming, a complete retainer the return of the piston. Before if placing the segment springs, it must be applied weld nuggets in the groove, in the very small interval of the extremities of the springs, not to have the risk of these to twirl when the bombs are to function, joining the extremities of the two springs, leaving to lose some water. The weld that will be applied, must be lined up with the body of the piston, leaving space in the groove for the spring of the segment, that has the extremities in the opposing side. The lubrication of the segments, must be made with valuing, that if places in a deposit installed in each floating platform.

The valuing, for being a thicker oil, will better lubricate the pistons if instead of the central segment, to exist only one groove with 4 or 5 orifices in return of the piston. The valuing will have a pressure uniform the return of the piston, and as it is a thick oil, makes with that the two segments of the piston, are excellent water retainers. The deposit of valuing if fulls up to 95% of its capacity. To follow it is placed inside of the deposit over the valuing, an empty inner pneumatic tube. The inner pneumatic tube, must have more or less the diameter of the interior of the deposit, and can be an inner pneumatic tube of camion wheel, if the special experience to indicate that it is not necessary to manufacture inner pneumatic tube for this end. The valve of this air chamber, has lateral exit in the deposit, so that if it can full, when the deposit will be closed with a cover with rubber sealant. A air manometer is installed, that inside indicates the pressure of the chamber. A manometer must be installed as, that indicates the valuing level. If the pistons of the bombs to spend or to lose some valuing, the belly of the air chamber go descend, from the cover of the deposit. When the deposit alone has 25% of valuing, the air chamber leans in a central plate, that exists the 20 or 30 cm of the deep one. The plate is supported in a spring, and when it starts to be pressured from top to bottom by the inner pneumatic tube, makes to twirl the hand of the manometer and lights a red light, to indicate that she is necessary to full the deposit. It is calculated that the deposit must be cylindrical, so that the inner pneumatic tube if can install more easily. Of the opposing side to the manometers, a pipe with a count, that forms a "horizontal T", with another transversal pipe is installed. This must have enough length, to bind a flexible hose (with valuing) for each piston. The hoses must be on the base of the pistons. NOTE: the movement of the pistons, nor strains nor fold the hoses, because the floating platforms follow the movements of the pistons (4). These must have a socket or a species of cup, in the superior face. Also it must have a plastic scraper, circulate, with the diagonal face to go down for the center. Possible È that enters some fine sand, that the filters do not obtain to hold back. These fine sand residues, must be scraped of the walls of the cylinders of the bombs, so that they join to the center bad socket, where exist one buxom with a valve, that if opens when the piston is almost to arrive at p.m.s. The connecting rod of the valve touches in a small transversal bar, fixes in the top of the cylinder, forcing the spring of the valve. This confides from top to bottom, and the water on pressure, makes to leave some remaining portions fine sand, that the filters had not obtained to hold back, and that they they would harm the functioning of the bombs

(5). The small water spurt that banished the residues from sand, of inside for is of the bombs, goes down in the vertical line, through flexible pipes, and falls inside of the canal lock. The water that if loses to banish these residues from sand, is so little, that is almost insignificant.

If the manual bombs toggle, that if used old to take off water of the wells, if by chance functioned with a piston, then we arrive the conclusion, that we can use great bombs of piston, put into motion for enormous floating platforms, to return most of the water ace barrages. The piston bombs, must articulate in the inferior extremity, where if they support in the floating platform, and must also articulate next to the pistons, as happen with the knuckles of the engines. If in the support of the floating platform if it articulates for the left and for the right, in the joint next to the piston, it must be articulated back and forth. Although the stabilizing wheels of the floating platforms, if to lean ace walls of the canal lock, to keep the put in an upright position platforms, will have the minimum oscillation of the floating platforms, the knuckles can leave if they will not have joint in the two extremities.

FUNCTIONING: when a floating platform goes up, sets in motion a set of bombs of piston 5, that they pressure the water through behaviors 8, until the o level of the barrage. When the floating platform goes down, its proper weight pulls the enormous pistons for low, making the water admission for inside of the bombs, being these full ones, to initiate a new cycle. Each one of the bombs possess two valves of retention 6: one of water entrance, and another exit.

The automatic elevator station, has an automatic system to open and to close the floodgates, in order to full and to unload the canal locks. For each canal lock, also a manual floodgate exists, to close the water in case of emergency or for reason of maintenance. Therefore, to full the canal locks the first time, the manual floodgates with a winch or electric engine confide first, and alone later it is that the water passes in the automatic floodgates. When floating platform 2, starts to go up, when arriving at p.m.s, already it must open the floodgates automatically. The floating platform goes going up, as it goes falling canal lock 1. When it arrives at p.m.s., strains a steel handle that closes the entrance floodgate, at the same time that it strains as a handle, that opens the exit floodgate. The canal lock starts to unload, and the floodgate starts to go down. When arriving at p.m.i, he strains one third handle that closes the exit floodgate, at the same time that he strains one room steel handle, that opens the floodgate of water entrance, recommencing a new cycle. It is calculated that in one of the sides of the canal lock, two steel handles function, of the opposing side function the others two handles. It is mentioned that each one of floodgates 1,2,3 (more two that it is not possible to see in fig.1) confides when it is pulled by a steel handle, and is closed, when is pulled by as a handle. When initiating the functioning in the experimental phase, the respective refining, so that the floodgates open and close at the moment exact, of relatively slow form must be made, as the valves of the engines open and close at the certain moment, of extremely fast form.

This system of handles, seems perfect, but the floodgates must have opening in the horizontal line, and not vertical, because being great they serial very heavy, therefore idiom to overload the floating platforms too much. If they were moved the electric energy, would spend much energy. The floodgates must have one underneath sing inferior cut in diagonal line, so that the water starts to leave slowly, of the backwater, to prevent that the waters are too much barulhentas when entering in the canal locks. The handles can be thick special plastic ropes, because they do not become spoiled themselves if to be wet. The system of piston bombs, has the advantage of being able to function in heave of any height, it only depends on the height of bombs 5, and on the height of the canal locks 1.A force of the floating platform, depends on its dimension and load capacity. It is convenient that the entrance of the water in the bombs, is to the level of the dam or tank of retention, so that the aspiration of the water if it makes more easily, and the bombs are completely full, and it does not have air stock markets. Had ace canal locks to be underground, the water is unloaded for a tunnel that had to the unevenness finishes for appearing the unloaded surface the water in the river. So that the water has good exit for the river, and the tunnel does not accumulate sand, the end of the tunnel must be 1m lower. The floodgates and the bombs, and all the parts enter in contact with the water, must be construed with appropriate materials, as the turbines. The elevator station automatic, can have ones against weights, suspended in 4 or more steel handles, suspended in two sheaves each one. The platform floating and all the structure that in it if supports, has only 100 or 200 more kg than against weight, to obtain to go down until the o p.m. inferior.

This is calculated that against weights they make to increase the force of the floating platforms, even so is one of the last options. So that it is possible to place against weight, with the weight that if intends, it is necessary that it is divided in some equal parts. They are gone placing or removing weights of the suspended platform in handles, until if reaching against appropriate weight. The weights can be small or great blocks of hardened. Also we can opt superficially to a closed tank, that it is gone falling until if reaching the intended weight. The be opposed platform weight, is suspended in some steel handles, whose sheaves are installed in a tower of hardened. Each handle has that to the same pass in two sheaves the level.

The automatic elevator station, has conditions techniques to almost save 50% of the water that it uses in the canal locks. This system has that to have at least

two twin canal locks, but will be possible must be constructed more pairs of canal locks, so that the hydroelectric-power central office is still more productive. In this system of twin canal locks (fig.1) the canal lock that will be full, (when the floating platform if finds in the p.m.superior), unloads the water for the canal lock that is empty, (where if finds another floating platform in the p.m.inferior) the water goes up almost in the second canal lock until half of the wadding. The automatic floodgate only goes to open the water of the river to finish to full the canal lock, moment before waters reaching level the same. The canal lock that will be to unload, only opens the floodgate that unloads the water for the river, moments before the water that contains to the same reach level of the other canal lock. Being thus, the floating platforms, go up and go down with a course a little slower than an elevator, stopping only to make inversion of march in the p.m.superior, and the p.m.inferior. With this system of twin canal locks, (fig1) we go to save half of the water almost. That is very important, having in account that during the summer, the volume of water in the rivers, is very low. If it will be possible in terms technician, a floating platform that will be to go up, is only that It must close and open the floodgates, including a floodgate that makes to pass the water of a canal lock for another one. If it will not be this Possible detail to make right, when then the floating platforms go up, some open or close floodgates, when they go down the platforms open or easy to understand.

If a barrage during the summer, will have the very low water level, and therefore turbines are stops, can construct to opt to a water reservoir in the adjacent mountain, one 400 or 500 meters of height. If the two floating platforms will have capacity to raise of what 100 tons of weight, being used few bombs are not less loaded and perhaps it obtains To pressure a lesser volume of the water, for a great height! To little amount of water it is compensated by the great unevenness. The water when going down until the turbines, of a 500 height of 400 or m, can Produce energy sufficiently, to weigh of being little water. For this last system, necessary They are perhaps special turbines, perhaps smaller, to produce Electric Dade with little water and much pressure.

When the water leaves the floodgates to full any one of the canal locks, leaves with some pressure. To protect deep or the lateral part of the hoof of floating platforms 2, or 5, not canal lock of the deep one, a small wall of hardened must be constructed, with more 1m of length, what a floodgate of width, being 0,5 m more for each one of the sides of this.

This small wall of hardened, has only the height of the one for chest of a window and meets moved away from the floodgate, about 0,5m. This small wall has a vertical edge, to the way of the face that is turned for the floodgate. This vertical edge a little advanced, form two diagnosis faces, until ace extremities of the small wall, being thus, more resistant the force of the water, this capsizes more easily for the sides without making remain. The small wall of hardened in form of for chest, cannot afectar the heaves of the floating platforms, because it has that to have one definitive space between these and the walls of the canal locks.

NOTE: having in account that the camions tank carry about 35 tons fuel, the first experiences can be made with floating platforms with capacity to carry the 35 50 tons from load. Less than this load capacity, the experiences that will be made, they can not show the real capacities of this system. Therefore one will be possible, until the first experience, made only with a canal lock and respective floating platform, must be made with a floating platform, whose load capacity must must more be of 100 tons. Before making any experience, we must calculate optimum possible, the one that height we will be able to pump the water, how many cubical meters for the moment we will be able to return the barrage, having in account the diameter and height of the bombs, because when shorter these will be, smaller will be the passage of the pistons, and therefore the floating platforms, will have that to make march inversion more times, for each hour that passes. It is mentioned that: for each inversion of march, it goes to have during some seconds, a small interruption in the flow of the water.

IMPORTANT NOTE: in the first experiences, it must be started for placing a bomb of piston with diameter of 1 the 4 m, inside of the floating platform, (to the center of this, so that she is balanced). After that, we go added more bombs, until the o has limited of the capacity of the floating platform, that is: until the water of the 2 canal lock to arrive 1 or m of the rim of the floating platform. Everything this can be fact, before being constructed the twin canal lock, exactly there to the side. ATTENTION: all the people, that a batelão, that arrives at the loaded sand wharf, obtains to load some camions. We can conclude that: although the floating platforms to be rectângulares or square shaped, its interior more or less will be seemed, with an empty batelão, where they only seat the knuckles of the piston bombs, or another system, as for former: a mobile tank, supported in an elevator of crossed bars, or simply supported in a fixed structure in the floating platform. Beyond the strict necessary accessories if they do not have to overload the platforms floating, with tools, unnecessary objects, since these extra weights it will retiree some capacity and power of rise. The automatic elevator station, also can come to be used, in the energy of the waves

- NOTE: at this moment, it is calculated that if it must place a spring helicoidally and a shock absorber, together ace superior extremities of the steel handles that bind to the floating platforms ace floodgates, to alleviate the impact initial, when the floating platforms strain the handles to open floodgates 1,2,3. Therefore the orifice of the ticket of the oil inside of the shock absorber, must be wider or narrower, as the experience to indicate, of form that when the floating platform to strain the handle, this can actuary softest possible. This system prevents that the steel handles can leave, if the floating platforms will have a relatively fast course, having as objective, a bigger generation of electric Dade. The shock absorber places in the interior of the spring helicoidally. The steel handles, are on of form that the springs helicoidally if compresses (and it does not strain) when the handles opens or closes the floodgates. This wants to say that the steel handle, league in the ring more moved away from the shock absorber. The spring helicoidally has two forts manilas, (one in each extremity) where if supports. After inside placing the shock absorber of the spring, a ring is placed to rectangular, in one of the fixed rings of the shock absorber. This ring has more 5 or 10 cm of what the length of the shock absorber, when this completely is extended. In the other fixed ring of the shock absorber, another ring is placed to rectangular and is leagued to it last part of the handle, that only has more 1 or 2 meters, after that, places the set all: shock absorber, spring helicoidally, and two rings rectangularesinside of a pipe of copper or in ox, so that the rings did not leave the position lined up with the shock absorber. These rings rectângulares have more 2 or 3 cm of width, what the diameter of the spring helicoidally, and must be placed in cross, so that the spring is in the way them two rings, without having friction. It summarizes: the spring helicoidally, and all this set of parts, is placed in the handle, 1 or 2 m of the superior extremity, that if finds outside of water, where binds the floating platform. If the rings rectângulares too much to make friction in the pipe, and if this are subject to leave due to the consuming, must be placed some ornaments in the top of the rings rectângulares, and in the parts where it will have friction. In the top of the rings rectângulares, places a rolling of each side of the linking of the handle. In the other extremity of the ring, a rolling of each side of the ring of the shock absorber is placed.

----When the first experiences to become, if the piston bombs will have many damage, because of the fine sand residues, that the filters do not obtain to hold back, can opt to putting these bombs to function as powerful oil bombs, because the platform will have much force of low for top. These great bombs, can supply oil on pressure, to make to function some turbines, equal those that already exist in some machines. These turbines, can put into motion great generators or alternators. As the oil is fluid slower than the water, perhaps but it can make the same pressure, these turbines need a gear, that multiplies the speed between the turbine and the alternator. The reverse of the medal, in this I finish system is that the oil on pressure, is supplied in little amount, because the bombs will have that to be smaller, of what they were water bombs..........

### SYSTEM OF MOBILE TANK

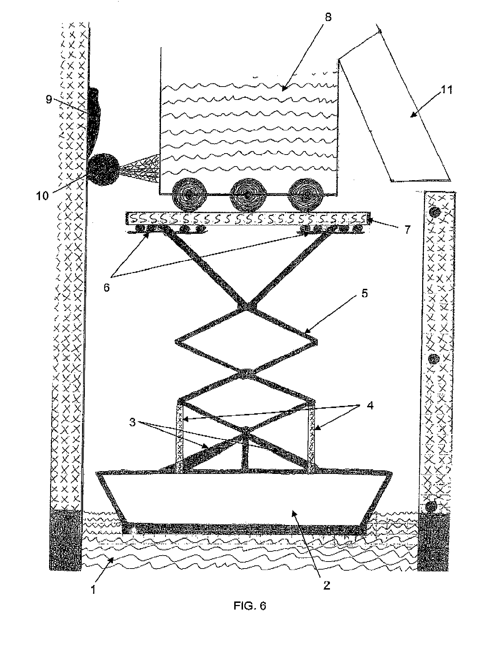

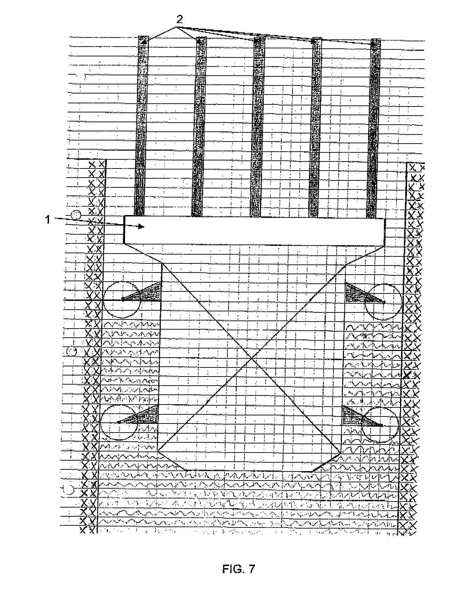

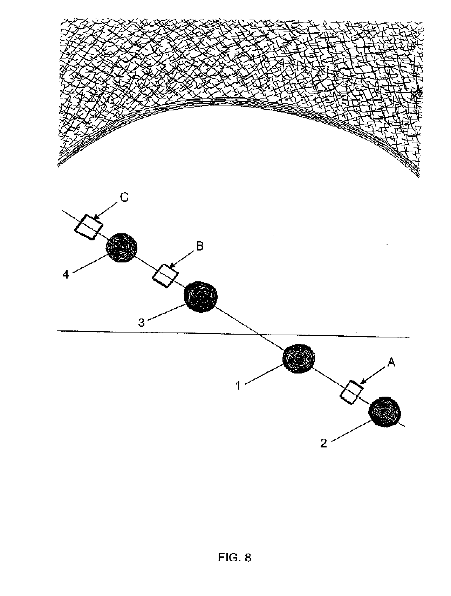

After the description of the system of piston bombs, we go to study a system that is perhaps simpler and more economic. This as optional system, in the automatic elevator station, substitution the piston bombs, for an enormous mobile tank (fig.6), that it is placed over an elevator of crossed bars 5, put into motion for floating platform 2. Also we can opt to placing the mobile tank over a fixed structure, on of the floating platform. In this in case that it functions in different way.

- Mobile tank 8, has the form to rectangular or square shaped, and is supported in two lines with some wheels of iron, very next one to the others. When the floating platform is to go up and to go down, this tank to rectangular and the structure where if it supports inside go up and go down of a metallic structure or hardened tower of 12. This enormous tank, has some sheaves and wheels that roll in a vertical line, fixed in the metallic structure or tower of hardened. They are these vertical lines that keep the firm tank in the ascent and the descending. The tower of hardened, must have two vertical lines in rectaguarda, two vertical lines of the right side, two vertical lines of the left side, two vertical lines in the front (where it unloads the water). These two last vertical lines, are lined up with the sidewalls of tank 8. Exactly empty, the mobile tank not it derails easily, due to the weight, and had ace sheaves 10, that they roll in the walls of the tower of hardened. The tower of hardened, has the form of a box of elevator, and in the dump point it has an enormous window for where it unloads the water. When floating platform 2, if finds in the p.m.inferior, the tank receives the water from the dam or tank of retention, through a behavior whose the 2 diameter is of 1 m, when a tank is full, and the water leaves arrives a boiler, and falls for inside of the canal lock.

The boiler hinders that the water falls for inside of the floating platform. This starts to go up, carrying enormous tank 8. When arriving close to the end it passage, the sheaves of rectaguarda 10, finds a hill or stands out in the lines, that go to compel the enormous tank, to dislocate 1m on of the line of iron 7 almost. When advancing, it places its wide and shortness boiler, over the wall of a tank constructed in hardened, at the same time that it strains a steel handle, that actual in a mechanic system, that opens floodgate 11. This floodgate opens underneath for top, being suspended in a cross wind axe, that if finds in the top. The floodgate of the mobile tank, is closed and insurance for a bar of security, in form of "manufactured U" with beams of iron in form of "H", because never fold and is resistant. A axle is installed as, parallel to the axle of the floodgate, some centimeters the front where the bar in form of "U" is suspended. Had ace lateral visors of the floodgate, one second bar in "inverted U" is placed, with the extremities turned for low, and that they are articulated in the first bar in "U". Superficially in the horizontal part of the bar that has the extremities turned for low, he is fixed or soldier a axle, whose extremities they pass over the lateral visors, being with two tips of 20 or 30 cm is of the visors. In these two extremities of 20 or 30 cm, articulate two bars diagonal, that they bind the inferior extremities to a part that if articulates in a fixed lode, in the exterior of the sidewalls of the tank. The two diagonal bars, are articulated in the two extremities. In the inferior extremities the diagonal bars have a joint similar to the joint of the laminar springs of camions. It can be said that the inferior extremities of the diagonal bars, are suspended in the fixed lode, through the part that if spoke behind. This part, has a small connecting rod turned for top. This fixed connecting rod, is part of this only part. This connecting rod is in the vertical position, and if actual in a spring that if articulates, in another fixed lode, in the exterior of the walls of the tank. This system with spring helicoidally, actual of form the one that the floodgate is when closed insurance, and also it is insurance, when it is opened, while the water leaves the tank, during 50 or 60 seconds. As it happens with the springs of the interrupters of the house light, where the springs keep the button in the light position accede, or in the position of extinguished light, also this mechanical system, keeps floodgate 11, in the position of aberta11, or the position of closed. The helical spring of this system, has in its interior, a pipe that enters in another pipe, (as if it was a shock absorber), so that if it keeps right and it does not come to leave. When mobile tank 8, arrives at p.m. superior, and advances 0,5m onward (due to results 9, of the vertical lines of rectaguarda), and strains a steel handle, that acute in a ring, of the connecting rod that acute in the spring. When this handle strains, holds 11, opens, unloading the water of the tank moves 18.

We can put the handle to pull in any position since that if it places one or more sheaves in fixed lodes.

However, it will be necessary to increase the force of the handles, we can also use a system of mobile sheaves. Floodgate 11, has in the exterior next to the baseboard, two or three fixed connecting rods, with tire wheels masses in the extremities. Each one of these connecting rods, meets inside of a helical spring, to pressure floodgate 11, when closing, and so that the more or less horizontal wheels have a course, perpendicular the floodgate. When tank 8, finishes to unload the water, the platform flutuante2, it starts to go down, and the mobile tank withdraws, to move away the boiler, of the wall of the deposit of hardened. Mobile tank 8, withdraws stops backwards, because the lines where if it supports 7, they have a fast inclination stops backwards. When the platform camera to go down, the sheaves of rectaguarda leaves two results 9, stops backwards and the tank continues to go down next to the wall of rectaguarda 12. The wall of the deposit of hardened, has a slope, where they roll the sheaves of the floodgate, compelling it to close it. To break aqua, the wheels of the floodgate, they continue to twirl in the walls of the elevator (tower of hardened), until arriving at p.m.inferior1.

--In the system of mobile tank, floating platforms 2, function in the same way that in the system of the piston bombs. NOTE: if when the mobile tank to unload, the platform to give a entice for top, mobile tank 8, must be controlled for the 4 or most cushioning ones, with visors similar to those that cushion the shock of vaguest of the convoys. In this in case that, when mobile tank 8, reaches the maximum height, the visors of the shock absorbers lean exactly in the tact one of the tower of hardened.

Therefore, when mobile tank 8, to give a entice for top, does not exist no shock, because the shock absorbers already were leaned in the tact one of the tower of hardened. When floating platform 2, arrives at p.m superior, must keep a soft course until stopping. When canal lock 1, finishes to full, the elevator of crossed bars 5, or in another structure where if it supports the mobile tank, it has to have enough height, to unload the water in the deposit of hardened, that it meets to the maximum level of the barrage. ATTENTION: if not to install an elevator of crossed bars 5, and if to install a fixed structure, ----- the meters that mobile tank 8, has that to go up, since the level of dam 8 or tank of retention), until the height of the deposit of hardened, are the same meters that the floating platform has that to go down, since the level of the dam, until the o p.m inferior1.

Not to forget, that beyond the meters covered in the vertical line for floating platform 2, the part to also add the meters of depth of the water, that are necessary so that the platforms can float in p.m.inferior 1. The system of against weight, is equal what it is used in the system of piston bombs. Against weight, it makes to increase the force of the floating platforms, 8 underneath for top), thus obtaining, to carry a tank from water with bigger dimensions. Floodgate 11, of the mobile tank, must have a jamb where if they place rubber, at the moment where a little for being goes up more empty, it strains a steel handle, that opens the floodgate of discharge of the canal lock. NOTE: mobile tank 8, only has 2 sheaves 10, in rectaguarda, that they roll in two lines. The front, is the wheels of the floodgate, that give security to the mobile tank in the ascent and the descending, twirling in metallic and smooth surfaces. In the sides, they roll 2 or 4 wheels in metallic surface and smooth. You remain lateral wheels, must be directional. When the mobile tank arrives at the p.m.superior, and if it dislocates in the horizontal line, these wheels leave to twirl in the vertical line, and start to twirl in the horizontal line, because they are directional, as the wheels of the stands of the supermarkets, that they turn for the side that we pull the stand. The deep one of the mobile tank, must have an inclination of some centimeters, so that the water unloads until the ο last liter, of relatively fast form.

------A detail exists very important technician, in the functioning of the hydroelectric-power central office, if this will have an automatic elevator station, with more than a pair of twin canal locks. For former: if a barrage will be equipped alone with a pair of twin canal locks, and if these two canal locks do not obtain to use all the water that if can use to advantage, (including the water that is sucked by the piston bombs, and the one that are used in the canal locks), are must start to have two pairs of canal locks.

If two pairs of canal locks, also do not obtain to use all the water that leaves the turbines, then must be constructed plus some pairs of canal locks, the same the level, and respective floating platforms, until obtaining to use all the water that leaves the turbines. Now we go to imagine, that we construimos an automatic elevator station, with two or more canal locks and respective floating platforms, and that this elevator station obtains to use to advantage all the available water. Moreover we verify that the floating platforms, they go up and they too much go down to decagram, because the bombs and the canal locks, delay much time to full. In this in case that, a good solution exists: to install plus some turbines, so that it has left more water the barrage, if this continues full. If we increase the number of turbines and generators or alternators, we increase the production of electric energy.

The automatic elevator station, exactly that it has some canal locks the same the level, will be alone an elevator station. A hydroelectric-power central office with two or more automatic elevator stations will only be considered, will have some canal locks, constructed in different levels. If the river downstream of the barrage, starts to go down 200 or 300 m of this, this wants to say that we can construct one second automatic elevator station, to an inferior level the discharge of the canal locks of the first elevator station, for reaproveitamento of the water that leaves the canal locks. We arrive the conclusion, that is possible to construct some elevator stations, in different inferior levels, since that the river continues to go down, during some meters or some kilometric. The second automatic elevator station, has that to return to the water the first one, (through the dam), and not directamente the barrage. This system must function thus, because it returns a bigger volume of water, since the height will be only of 6 the 15 m; that it will be more or less the height of the canal locks, more the height of the tank of retention. Being thus, the floating platforms, can put into motion a bigger number of piston bombs, because the weight of the water is lesser. So far we relate the elevator stations automatic, that can be constructed in inferior levels (underground). However, also we can think about constructing automatic elevator stations, the top of the level of the dam. In project A/B automatic inferiors and superiors, constructed in different levels are represented some elevator stations. The inferior elevator stations, make the reaproveitamento of the water, unloaded for the turbines and the superior canal locks. The automatic elevator stations, constructed the top of the level of the dam, function as steps until the o level of the barrage, becoming possible the devolution of a bigger volume of water, which had to the unevenness not to exceed the 15 or 20 meters. As sample project/B, if set of elevator stations automatic, to form line diagonal, (throughout the hillside that it goes down for the river), since the last elevator station, until the o level of the barrage, we can think about the possibility to opt to using the system of mobile tank, installed in a fixed structure, over the floating platform, without having the elevator of crossed bars. Therefore it is logical that thus, we better use to advantage the force of the floating platforms, in the same way that a great ship - cruise carries one or two swimming pools, to amusement of the tourists. One is to relate the option to it for the system of mobile perhaps tank, because it is more economic, of what the production of piston bombs, of 1 the 3 or 4 meters of diameter.

NOTE: the third automatic elevator station, must return the water to the tank of retention, that supplies to the water the second elevator station. Thus it happens with all the automatic elevator stations, constructed in inferior levels, and with that they are constructed the top of the level of the dam.

### FIGURE 1

1 - floodgate of linking between two equal canal locks.
2- wadding floodgate of the canal lock of the left side
3 - wadding floodgate of the canal lock of lade right the
4 - knuckles that if support in the floating platforms, pulling the pistons.
5- equal canal locks that function in set
6 - pistons of bombs
7 - cylinders of the bombs
8 - floating platforms
9 - wheels of the floating platforms.

### FIGURE 2

1 - canal lock of the left side, that finishes to unload water for the river.
2 - canal lock of the right side, that is almost full
3 - small tank that regulates the discharges intermittent or discontinuous, of the two canal locks.
4 - tunnel
5 - one of the edges of river
6 - barrage
7 - discharge of the water in the river.

### FIGURE 3

1 - canal lock
2 - floating platform
3 - knuckle
4 - pistons cylinders of
5- bombs
6 - valvulas
7 - behavior that receives the water from bombs
8 - supports or supports of
9 - knuckles - iron structure where the cylinders of the bombs are
   suspended through a T, that will be the part highest
   of the bombs.

### FIGURE 4

### (DETAILS DE UMA OF the BOMBS)

1 - canal lock
2 - floating platform
3 - knuckle
4 - piston of bomb
5 - cylinder of bomb
6 - valve of entrance and valve of exit behavior of
7 - entrance
8 - behavior of exit.

### FIGURE 5

1 - canal lock
2 - floating platform
3 - knuckles
4 - pistons
5 - cylinder of bombs
6 - valves
7 - behavior of entrance
8 - behavior of exit

### FIGURE 6

1 - canal lock
2 - floating platform
3 - fixed structure in the top of the canal lock. This is a structure
   of triangular iron with a small central pillar.
4- columns of iron or knuckles, that pull elevator
5 - elevating of crossed bars
6 - rolamentos lines of iron and
7- structures where these if support
8 - mobile tank
9 - two ressaltos that make the mobile tank to advance, when arrive at the p.m.superior.
10- two wheels of rectaguarda of the tank, that roll in vertical lines, until arriving at the ressaltos.
11- it holds of the mobile tank

### Figure 7

1 - floating platform, whose model seems to be adjusted
2 - knuckles that bind to the pistons, in the superior extremity.

### Project/the B

This project, shows a diagonal line, with a set of four automatic elevator stations, (two inferiors and two superiors). This diagonal line represents the hillside of the mountain that goes down until the o river.
---1-2-3-4 = automatic elevator stations

A - B - C = tanks of retention that supply to the water ace bombs and ace canal locks. Only elevator station n°1, is that directamente it directamente receives the water from the dam, that serves of tank of retention, to this same elevator station.

## Claims

1. In compliance with it presents invention, the automatic elevator station is a system characterized for understanding a structure, consisting of two twin canal locks and respective platforms floating (fig 1), the automatic elevator station is constituted by: a floodgate of linking between two canal locks (1), a wadding floodgate for a canal lock (2,3), a floating floodgate of discharge for each canal lock, that if find of the opposing side and therefore it is not possible to see these two last floodgates, platforms, has 4 stabilizing wheels, and each lateral face (9) that they roll in the walls of the canal lock, preventing that the platforms have oscillations when floating in the water.

2. The automatic elevator station, in accordance with reclamation 1, characterized for the wadding and water discharge of the canal locks for the river, made through an underground tunnel, whose 2 diameter will have about m (fig 2), had to the declivity the tunnel finishes for appearing to the surface, returning the water to the river (7).

3. Each floating platform can put into motion two, three, four or more bombs of the piston, whose the 3 diameter it can be of 1 m (fig 3), the piston bombs are suspended through a "T" in an iron structure (9), giving resistance to the suspended bombs when the pistons go up and holding them when the pistons go down.

4. Each bomb has a valve of water entrance and another valve of exit, in the horizontal part of the "T". (fig 4), leaves to leave the water the right side.

5. Beyond the system of piston bombs, an alternative system is studied: that it is a system of mobile tank installed in an elevator of crossed bars (fig 6), or simply placed on of a constructed structure of iron inside of the floating platforms.

6. The automatic elevator station, characterizer for not spending no electric Dade; in the current technique the return of the water ace barrages, is made with electric bombs, that consume energy proceeding from the Aeolian parks, or of the thermoelectric that burn coal, or of other power plants.

7. It is calculated that in the future, the automatic elevator station or a set of automatic elevator stations installed for the most part of the barrages, it will be the solution for this problem technician, because returns most of the water the barrage, while this continues to produce energy electric.

## Amended claims

### Amended claims in accordance with Rule 137(2) EPC.

**1.** A system for refilling a retained mass of water, for instance in a dam, with the water used in the generation of energy, **characterized by** having the means that allow the return of the water to the dam through automatic pumping stations.

**2.** A system for refilling a retained mass of water as claimed in claim 1, **characterized by** comprising at least two twin canal locks each one with a floating platform and each one with at least a piston pump, an underground tunnel that carries the water to the level of the dam, and an iron structure that supports the pumps.

**3.** A system for refilling a retained mass of water as claimed in claims 1 and 2, wherein the pistons have between one and three meters in diameter.

**4.** A system for refilling a retained mass of water as claimed in claims 1 and 2, wherein the pistons of the pumps have three segments.

**5.** A system for refilling a retained mass of water as claimed in claims 1 and 2, wherein the floating platform contains at least four stabilizing wheels in each side.

**6.** A system for refilling a retained mass of water as claimed in claims 1 and 2, wherein each pump has an inlet valve and an outlet valve.

**7.** A system for refilling a retained mass of water as claimed in claims 1 and 2, **characterized by** the fact that the manoeuvring of the floodgates controlling mechanisms can be performed through control cables or through an hydraulic system.

**8.** A system for refilling a retained mass of water as claimed in claim 1, wherein the system of piston pump can be replaced by a mobile tank installed in a lift station.
